# EUROPEAN PATENT SPECIFICATION

(11) **EP 3 222 174 B1**
(45) Date of publication and mention of the grant of the patent: **13.03.2019**
(21) Application number: 15819845.7
(22) Date of filing: 17.11.2015
(51) Int. Cl.: A47J 31/06, A47J 31/36, A47J 31/40, B65D 85/804, C11B 1/06, A23L 3/44, A23P 10/00, A23L 2/12, A23N 1/00

(54) **METHOD FOR ELABORATING AN OLIVE PREPARATION AND FOR OBTAINING AN OLIVE OIL IN SITU BASED ON THE PREPARATION AND MEANS FOR PUTTING THE METHOD INTO PRACTICE**
VERFAHREN ZUR HERSTELLUNG EINES OLIVENPRÄPARATS UND ZUR ERZEUGUNG VON OLIVENÖL IN SITU AUF DER GRUNDLAGE DER HERSTELLUNG SOWIE MITTEL ZUR UMSETZUNG DES VERFAHRENS
PROCÉDÉ D'ÉLABORATION D'UNE PRÉPARATION D'OLIVES ET D'OBTENTION D'HUILE D'OLIVE IN SITU À PARTIR DE LA PRÉPARATION ET MOYENS DE MISE EN PRATIQUE DU PROCÉDÉ

(30) Priority: 17.11.2014 ES 201431685
(43) Date of publication of application: 27.09.2017
(73) Proprietor: Bonesil Expansion, S.L., 43850 Cambrils (ES)
(72) Inventor: ALCOLEA MARTINEZ, Carmen, 43850 Cambrils (ES)
(74) Representative: Sugrañes Patentes y Marcas
(86) International application number: PCT/ES2015/070820
(87) International publication number: WO 2016/079357

(56) References cited:
- EP-A1- 1 978 078
- EP-A1- 2 095 716
- EP-A1- 2 338 357
- EP-A1- 2 404 844
- US-A1- 2004 079 237
- US-A1- 2006 130 665
- US-A1- 2006 174 769
- US-A1- 2010 173 856
- US-A1- 2011 200 725
- US-B2- 7 464 636

## Description

### Technical field of the invention

The present invention belongs to the agri-food industry and, more specifically, to methods for processing and handling olives to obtain olive oil.

The object of the present invention is a method for elaborating and preserving an olive preparation made from an olive paste, as well as a single-dose capsule for instantly obtaining olive oil, whereby it is possible to obtain a high-quality olive oil at any time of year and/or in any geographic location, preserving its original organoleptic properties, flavour, aroma and colour, and its nutritional properties intact.

### Background of the invention

A multitude of methods and systems for obtaining olive oil are currently known. However, most of said systems use an obsolete and deficient production technology that causes the destruction of most of the high antioxidant content of olives (biophenols, tocopherols and squalene) and which have a positive health effect.

More specifically, extra-virgin olive oil is considered an essential food and a maximum representative of the Mediterranean diet, whose main producers, Spain, Italy and Greece, account for more than 75% of world production.

Furthermore, it is well known that the quality of olive oil is determined by its organoleptic properties (flavour, aroma and colour) and by its free fatty acid content. In this regard, there are various regulations in the European Union on oil classifications in six categories in accordance with the concentration of fatty acids.

At present, one of the main drawbacks is that current olive oil extraction methods and systems are based on a pressing process for obtaining olive oil by means of crushing, beating/homogenisation and centrifugation, performing the entire process at the same time the olives are harvested, storing the product either in containers or in bulk in large volumes for subsequent bottling thereof and wherein, with the passing of the months, the olive oil loses its main qualities, directly affecting its quality.

More specifically, as regards the marketing thereof, olive oil is currently marketed in bottles (glass or plastic) and in cans protected from sunlight which, while seeking to delay, more or less successfully, the harmful effects of temperature, sunlight, air or contact with the plastic material of the bottles, they do not avoid the loss of natural quality in the olive oil as a result of the inexorable passage of time, whereupon the oil is exposed to oxidation and to different degenerative processes that significantly affect its organoleptic properties (flavour, aroma and colour), as well as its nutritional properties. This forces distribution companies to often have to discard and eliminate huge quantities of produced and bottled olive oil, with the ensuing economic losses.

Another drawback to which an efficient, real and guaranteed solution has not yet been found is the impossibility of being able to taste and consume a high-quality olive oil, regardless of the time of year (annual growth cycle) or the consumer's geographic location, having to travel, in the best case scenario, to specific establishments such as specialised shops, restaurants or supermarkets where they can offer different types of oils, but whose quality may be likewise undermined, as various months may elapse since the olives are harvested until they are offered for sale to consumers or used for culinary purposes.

Patent WO 2015079088 discloses a machine for instantly obtaining oil from an olive paste. This paste is hydrated and, therefore, the paste only has to be pressed to obtain a mixture of oil and water therefrom, which is separated in a centrifuge that the machine is provided with.

The machine requires a receptacle in which the paste is deposited. Preferably, this receptacle can be removed from the machine so that the user may conveniently deposit the paste therein. Subsequently, the user reintroduces it in the machine and it starts to operate.

When the machine starts to operate, a pressure system compresses the paste until a mixture of water and oil comes out of the receptacle through holes arranged in the walls thereof. From there it falls onto a tray, through which it reaches a centrifuge in which the separation of the oil and water (which is the mixture obtained when pressing the paste) takes place.

The receptacle must necessarily be cleaned after the use thereof so as not to leave traces of the product and so that the waste does not block the outlets of the receptacle in the direction of the centrifuge. In addition, the proper operation of the machine is subject to being properly filled and with the ideal amount of paste. Furthermore, the storage of the paste to be used requires certain precautions to correctly preserve the qualities of the paste.

The patent document EP 1978078 refers to a method for the preservation of olive oil which consists of freezing and/or vacuum-packing the paste obtained from ground olives. A proposal for obtaining olive oil from the said frozen and vacuum-packed olive paste comprises emulsifying or stirring the olive paste, extracting the oil through centrifugation, and separating the aqueous phase from the oleous phase through decanting.

### Description of the invention

In order to resolve all the aforementioned drawbacks, a method is disclosed for obtaining an olive oil *in situ,* which comprises the operation of packaging and preserving in a capsule, preferably a single-dose capsule, a dry olive preparation formed from an olive paste, which is first frozen and then freeze-dried; and the operation of reconstituting the olive paste by hydrating it inside the capsule to obtain an olive oil that will be extracted from the capsule by pressure.

In one embodiment of particular interest, the olive paste reconstituted inside the capsule is also squeezed inside the capsule.

The procedure guarantees the preservation of all the product qualities, i.e. of the olive oil, which may be obtained at the precise instant in which it will be consumed.

In fact, the aforementioned drawbacks are resolved by means of the present invention, providing a method for elaborating and preserving an olive paste to instantly obtain olive oil, by means of which it is possible to instantly obtain high-quality olive oil, maintaining its original organoleptic properties intact (flavour, aroma and colour), as well as its nutritional properties (antioxidants, vitamin E, biophenols and squalene), for the consumption thereof at any time of year and geographic location, enabling it to be consumed several months after the olive harvest without loss in quality.

The capsule is designed for a single use, such that the subproducts generated by the reconstitution and pressing of the olive paste shall be stored, as explained hereinafter, in the capsule and therefore the maintenance of the means used to obtain the olive oil, such as an extraction machine, is very simple and will not require the filters or similar to be cleaned. In this regard, the invention leverages the lessons learned from the coffee or tea industry in relation to non-reusable capsules.

The procedure for obtaining the aforementioned olive preparation comprises the following phases: harvesting of the olives at their optimal level of maturity; storing the olives, preferably in silos for a period of less than 24 hours; washing the olives; and grinding the olives to obtain a paste. In addition, the method described herein comprises the phases of a first packaging of the paste in an airtight and aseptic bag; freezing the packaged paste; freeze-drying the frozen paste; and final packaging of the freeze-dried paste in single-dose capsules.

While not being a part of the invention, one variant envisages additivating the paste with at least one acceptable food additive. This additive may be a phenol absorbent and preferably may be PVPP, polyvinylpolypyrrolidone, which will aid in retaining bittering particles/components during the reconstitution of the olive paste.

With respect to the olive harvest phase, the olives can be both green and ripe, in accordance with the type of oil desired at a given time.

Likewise, it has been provided for that the method, object of the invention, may additionally comprise an olive pitting phase between the washing and grinding phases, respectively. This will once again depend on the type or variety of olive oil to be extracted at a given time.

Preferably, the phase relative to the first packaging of the paste is carried out in an inert atmosphere, in aseptic and anaerobic conditions, by means of a nitrogen injection. This makes it possible to avoid possible oxidation processes that degenerate the olive paste, which would imply important quality losses in its organoleptic properties.

While not being a part of the invention, one variant envisages that the freezing phase is carried out in freezing containers that provide temperatures of up to -40°C to ensure an appropriate temperature for freezing the packaged paste and avoiding the quality losses caused by the external temperature. More preferably, the optimal freezing temperature of the packaged paste is comprised between -19°C and -21°C.

As regards the freeze-drying phase, it is carried out by introducing the frozen paste in vacuum chambers for drying and removing the water contained in the paste through a sublimation process. This enables the water contained in the olive paste to pass directly from the solid state (frozen paste) to the gaseous state, without passing through the intermediate liquid state. This makes it possible to preserve the molecular structure of the paste without suffering any alteration of its organoleptic and nutritional characteristics, making it possible to obtain a high-quality olive oil.

In accordance with another object of the invention, a single-dose capsule for instantly obtaining olive oil in accordance with the previously described method is described below.

The capsule comprises a receptacle having an inner cavity only partially full of a dry olive preparation formed from an olive paste, firstly frozen and then freeze-dried, the capsule further comprising a filtering membrane arranged in or at the bottom of the receptacle and which has micro-perforations suitable for retaining the preparation and the passage therethrough of traces of olive wastewater (*alpechín*) or water particles that may contain an olive oil obtainable from rehydrating the olive paste inside the receptacle; and an upper film or adhesive that hermetically seals the receptacle at the top.

The receptacle may additionally comprise at least one perimeter step arranged on the lateral surface thereof and which in turn has second micro-perforations configured for the maximum filtration of an olive oil obtainable from rehydrating the olive paste inside the receptacle.

In one variant, the bottom of the receptacle is a perforated bottom and has adequate reinforcement means so that said bottom can resist inner capsule pressures greater than 10 bar and preferably greater than 15 bar.

In accordance with another aspect of the invention, a method for obtaining an olive oil from a capsule containing a dry olive preparation formed from a firstly frozen and then freeze-dried olive paste, said method comprising the steps of revealing the contents of the capsule; hydrating the olive paste contained in the capsule homogeneously inside said capsule; and squeezing the olive preparation with the reconstituted olive paste inside the capsule, extracting the olive oil obtained from the capsule.

A machine for putting this method into practice comprises a liquid tank and means for driving the liquid in the direction of at least one injection head, which has holes for injecting the liquid into a medium, such as the dry olive preparation contained in a capsule. In essence, the machine is characterised in that said injection head is mounted on a piston prepared for pressing the medium and subjecting it to a pressure greater than 10 bar, wherein the injection head may adopt at least two positions with respect to the piston: an operating position (A) in which the holes are arranged outside the piston; and another, concealed position (B) in which the holes are housed inside the piston.

In accordance with a variant of interest, the at least one injection head rotates around an axis parallel to or coincident with the piston axis.

Therefore, by means of said single-dose capsule, the inside of which contains frozen and freeze-dried olive paste, the maximum preservation of its organoleptic properties is guaranteed, having qualities similar to those initially obtained at the time of harvesting and collecting the olives. This makes it possible to stop the quality loss that occurs using conventional olive oil obtainment methods due to the passing of time, allowing the user to consume high-quality olive oil at any time of year and geographic location.

It should also be noted that the previously described single-dose capsule is applicable to an extraction machine configured to carry out a method combining the stages: rehydration, application of pressure and filtering. Furthermore, in accordance with the olive variety in question, an additional centrifuging stage has been provided for to fully remove any traces of water that may exist.

In one variant, the single-dose capsule is manufactured from a material which allows an adequate preservation of the freeze-dried olive paste, while supporting the aforementioned combined-stage method, said capsule preferably being manufactured from low-density polybutylene terephthalate (PBT).

### Description of the drawings

As a complement to the present description and for the purpose of helping to make the characteristics of the invention more readily understandable, this description is accompanied by a set of figures constituting an integral part thereof that, by way of illustration and not limitation, represent the following:
Figure 1 shows a perspective view of a single-dose capsule according to an embodiment of the present invention for instantly obtaining olive oil.
Figure 2 shows a view of the inner face of the capsule of Fig. 1.
Figure 3 shows a sectional view of the capsule of Fig. 1.
Figures 4a to 4c show schematic views of a sequence of a method for obtaining olive oil from a capsule containing a dry preparation formed from an olive oil paste according to a variant of the invention.
Figure 5 shows a schematic view of an extraction machine for cooperating with a capsule similar to that of Fig. 1.

### Detailed explanation of the invention

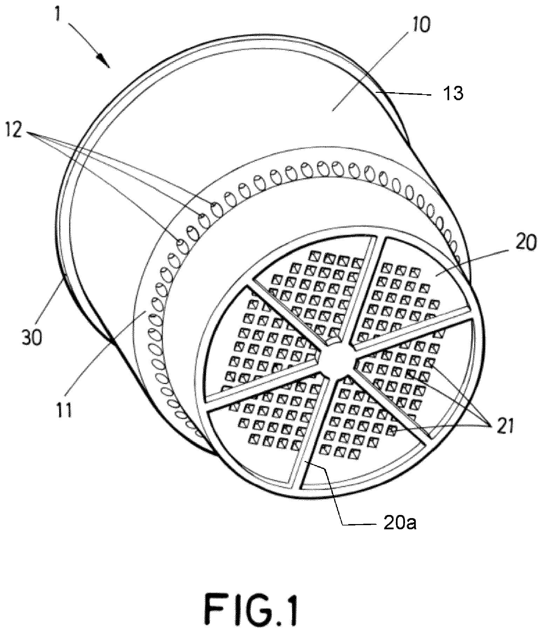

Figure 1 shows a perspective view of a capsule 1 for instantly obtaining olive oil according to a variant of the invention. In the example, the capsule 1 is a single-dose capsule and may be manufactured from low-density polybutylene terephthalate (PBT).

More specifically, the capsule 1 comprises a flared receptacle 10 that determines an inner cavity suitable for housing a dry olive preparation formed from an olive paste that is firstly frozen and then freeze-dried. Preferably, the amount of preparation is for a single-dose service and, to this end, it is provided that the amount of olive paste comprised in the preparation contained therein is between 50 g and 80 g. The dimensions of the capsule 1 are selected in such a manner that an empty space remains in the receptacle 10, i.e. that the preparation does not occupy all the space available in said receptacle 10.

In the example of figures 1 to 3, the receptacle 10 has an upper mouth on which an annular rim 13 directed outwards is formed, whose proposal is explained below.

The capsule 1 also comprises a filtering membrane 20 arranged on the lower base of the receptacle 10. Said filtering membrane 22 may be fully integrated in the bottom 20 of the receptacle 10.

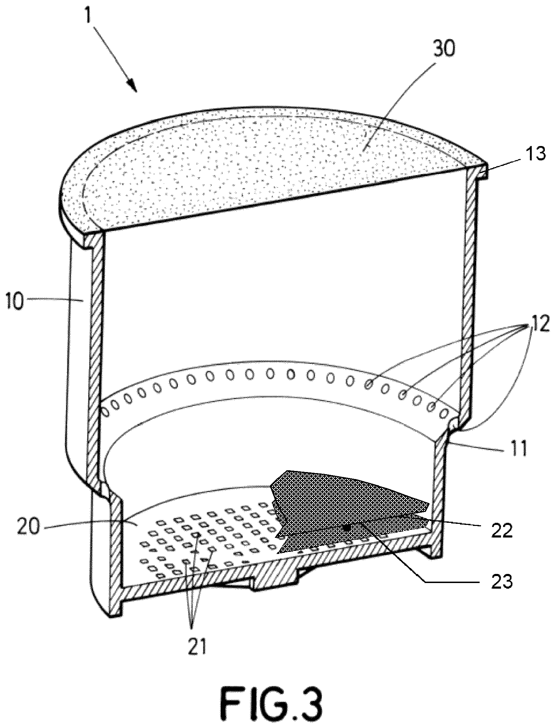

Alternatively, it is provided that the bottom 20 of the receptacle 10 will be formed from a single piece with the walls thereof and that the filtering membrane 20 is an originally separated element but arranged at the bottom 20 of the receptacle 10, between the olive preparation and the bottom 20 of said receptacle 10, as illustrated in the example of figure 3 in which, for a better understanding, the filtering membrane 22 has only been partially illustrated to reveal the bottom 20 of the receptacle 10. In this case, it is envisaged that the bottom 20 of the receptacle will have outlet holes 21 or that an extraction machine will equip the bottom 20 of the receptacle with outlet holes after the olive oil is obtained. In the first case, it is provided that the capsule 1 is inside a barrier package that prevents the passage of oxygen therethrough, for the purpose of preserving the olive preparation; and, in the second case, it is provided that the same capsule will be manufactured from a barrier material.

In any case, the invention envisages that the filtering membrane 22 is a cellulose filter having micro-perforations 23 for retaining olive wastewater or water particles therethrough that may contain the freeze-dried paste, thereby avoiding its transfer to the resulting olive oil.

The capsule 1 also comprises an upper film 30 or adhesive that closes the mouth of the receptacle 10, shown in the sectional view of the figure 3, to hermetically seal the receptacle 10. In one embodiment, it is envisaged that this film 30 will be manually removable from the receptacle 10 to reveal the capsule 1 when the olive oil is to be obtined. In another variant of the invention, it is provided that the film 30 will be firmly fixed to the annular rim 13 of the receptacle 10 and that, in order to reveal the capsule, it will be necessary to tear or break the film at a non-perimeter portion thereof, whereupon the film is joined precisely by its perimeter to said annular rim 13. To this end, the film shall have 30 weakening lines or similar that will determine preferred rupture lines.

The properties of the film 30 may vary according to the case. For example, it is provided that the film 30 will be made of barrier material if the capsule 1 is not provided in oxygen-resistant packaging, while this is not necessary if the capsule 1 is packaged in barrier package, all of which is already known in the field of capsules for the preparation of coffee or teas.

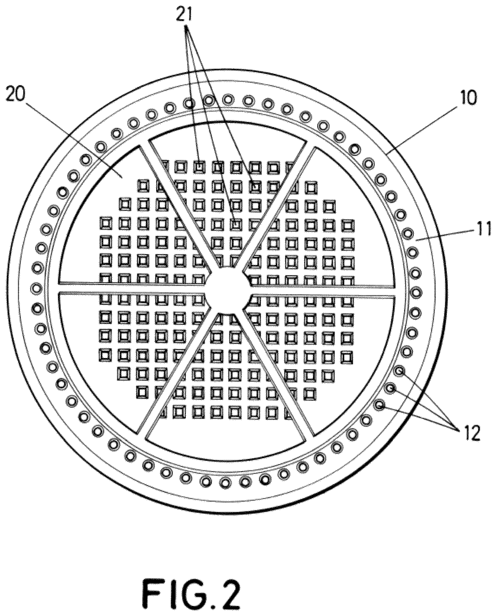

According to the embodiment shown in figures 1 and 2, it is provided that the receptacle 10 may additionally comprise a perimeter step 11 arranged on the lateral surface thereof, which may in turn have micro-perforations 12 configured for the maximum filtration of the paste to be contained inside the same.

In the context of the present invention, by micro-perforations we refer to perforations whose maximum clearance or width will be less than 1 mm.

Although in figures 1 to 3 a flared capsule 1 is shown, the possibility that it may have a cylindrical, square or any other shape that also allows it to fulfil its function successfully is envisaged.

In relation to the freeze-drying phase of the method for preparing and preserving the previously described olive paste, it should be mentioned that said freeze-drying phase is preferably carried out at a drying temperature of between 15°C and 35°C, and at a vacuum chamber pressure of less than 1 mBar.

Moreover, according to the present embodiment, other additional parameters of the freeze-drying phase are:
- condensation temperature: -41°C;
- pre-cooling temperature; -20°C;
- sublimation time: 3 hours;
- drying time: 24 hours;
- maximum weight per freeze-dried container: 3kg;
- maximum thickness of the freeze-dried container: 18mm.

In relation to the aforementioned drying temperature range [15°C-35°C], it should be noted that it will depend on the olive variety being used at a given time.

While not being a part of the invention, in one variant, it is provided that the olive paste will be additivated with acceptable food additives. It is also provide that these additives will be functional. For example, it is provided that the olive paste will be additivated prior to freezing or subsequent to the freeze-drying thereof, using PVPP, polyvinylpolypyrrolidone, for the purpose of retaining particles/components that could embitter the taste of the obtainable olive oil. Consequently, in a preferred embodiment of the invention the olive preparation shall comprise an olive paste that is frozen and subsequently freeze-dried using natural microtalc. Natural microtalc is a natural form of Hydrated Magnesium Silicate, natural talc in its pure state, and is a product manufactured from extra white laminar talc, which is physically and chemically inert, and lacking asbestos-type minerals from the amphibole and serpentine group.

By way of example, satisfactory results were obtained using approximately 0.5 g of PVPP per 40 g of paste.

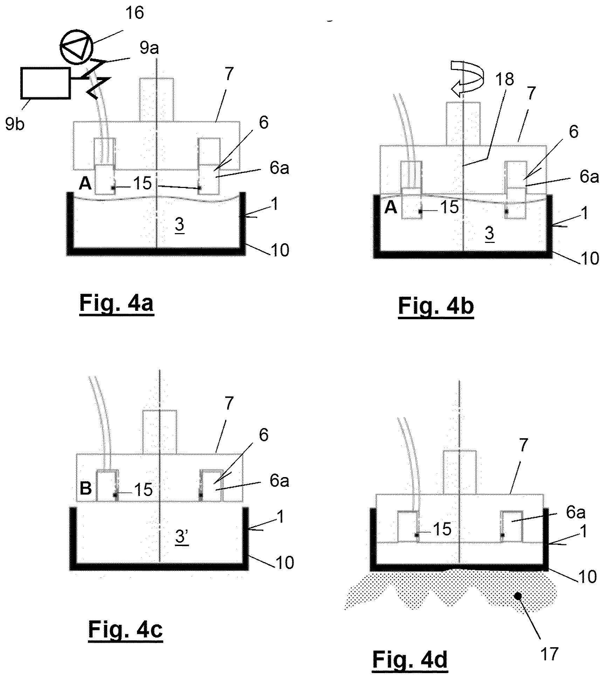

The sequence of figures 4a to 4d shows a method for obtaining olive oil from a capsule 1 such as the one described above. In order to obtain the olive oil, an extraction machine 2 prepared to cooperate with the capsule 1 and which is provided with the necessary means to reconstitute the olive paste from the olive preparation 3 inside the capsule 1 and for squeezing it for the purpose of obtaining an olive oil 17 (se figure 4d) that will be extracted from the capsule 1.

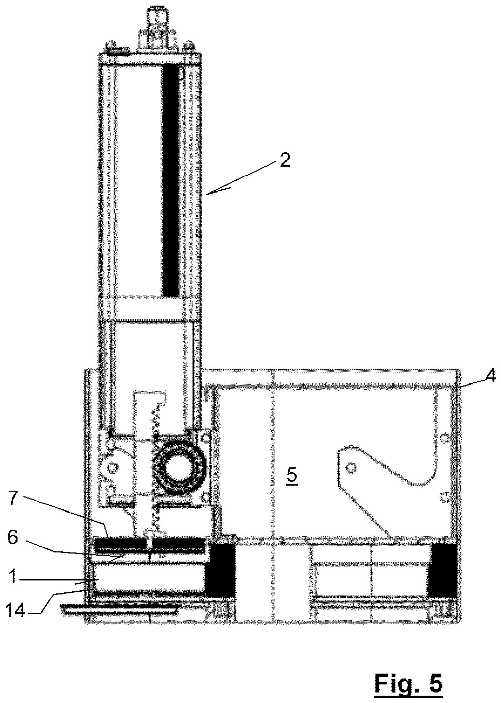

An example of the extraction machine 2 is schematically illustrated in figure 5 and complemented by figure 4a. The machine 2 comprises a casing 4 that includes a liquid tank 5 and means for driving 16 the liquid towards an injection head 6 mounted on a piston 7. In the variant of the example, the machine 2 also includes heating means 9a (schematically illustrated in figure 4a) governed by a thermostat device 9b, also represented schematically. The purpose of these heating means 9a is to ensure that the temperature of the liquid that will be used to reconstitute the olive paste, preferably water, is comprised between 20°C and 27°C.

The machine 2 further comprises a housing 14 dimensioned to receive a capsule 1 fitted snugly therein and to immobilise it in an axial direction with respect to the axis of the capsule 1. To this end, it is provided that the housing 8 is laterally open and equipped with an inlet on which the rim 13 of the capsule 1 is fitted, so that once the capsule 2 is placed in the housing 14 the capsule is retained. Naturally, it is provided that the machine has a hatch or similar whose shape complements that of the housing 14 to jointly form a chamber that envelopes the capsule 1 when the hatch is closed.

In the example, the injection head 6 may adopt at least two positions with respect to the piston 7, an operating position A where it projects from the piston 7; and another, concealed position B wherein it is housed in the piston 7.

Likewise, in the example, the injection head 6 comprises an annular chamber 6a which can be flooded with the pressurised liquid pumped by the driving means 16, which has a series of regularly distributed holes 15 that communicate the chamber 6a with the outside. The chamber 6a ensures a homogeneous distribution of the liquid that will be expelled through the holes 15. Preferably, the holes are circular and have a size of less than 0.5 mm, more preferably 0.2 mm.

The driving unit 16 is suitable for injecting liquid through these holes 15 in doses. For example, it is envisaged that in one dose an amount of liquid of approximately 5% to 10% by weight of the olive paste to be reconstituted will be injected. Preferably, the amount of liquid will be approximately 7% by weight of the amount of olive paste to be reconstituted. In practice, optimal samples of 10 ml to 20 ml of olive oil have been obtained from 50 g to 80 g of olive paste with the aforementioned liquid doses.

The method for obtaining this olive oil 17 is explained below in reference to figures 4a to 4d.

The capsule 1 is revealed, removing the film 30, and the capsule 1 is placed in the housing 14 of the machine 2.

Next, the machine 2 will execute the following steps:
- Based on the situation represented in figure 4a, a first forward movement of the piston 7 is produced, for the purpose of blocking the receptacle 10, introducing the working end of the piston 7 in the receptacle 10 through its upper mouth. Although in figure 4a the injection head 6 has been illustrated in an operating position A, it is also provided that the injection head 6 will be concealed in the piston 7, adopting its operating position B.
- Next, the driving unit 16 procures the injection of the necessary liquid for reconstituting the olive paste comprised in the preparation 3. However, the injection head 6 must previously be arranged in the operating position A of figure 4b if it was originally concealed inside the piston 7. In any case, and simultaneously to injecting liquid, for a better distribution and correct homogenisation in this reconstitution operation, the injection head 6 is made to rotate around a vertical axis coincident with the axis of the capsule 1, as shown in figure 4b.

In an alternative variant, not shown, it is envisaged that the injection head 6, instead of comprising an annular chamber 6a, will have various injection nozzles, each of which having one or more holes 15 for the outlet of the liquid. In this case, each injection nozzle will have a rotation capacity preferably around an axis parallel to the piston 7 axis 18.
- Next, the already reconstituted olive paste 3' must be squeezed. To this end, chamber 6a is concealed or, where applicable, the injection nozzles, from the injection head 6 in the piston 7, adopting its concealed position B as shown in Fig. 4c for the purpose of preventing the holes 15 from becoming blocked in the next step.
- Next, the unit formed by the piston 7 descends, preferably dragging therewith or in coordination with the forward movement of the injection head 6, which is concealed to protect the holes 15, squeezing the olive preparation with the already reconstituted paste as shown in figure 4d. Preferably, the machine 2 is prepared for the piston 7 to exert a pressure greater than 10 bar on the olive preparation 3. More preferably, this pressure will be between 15 and 18 bar.

It is provided that in the event that the receptacle 10 of the capsule has the aforementioned perimeter step 11, it will cooperate to stop the piston 7 in its downward movement. For example, the step 11 may be dimensioned so as to reduce the cross-section of the receptacle to the point that it prevents the passage of the piston 7, which has a greater cross-section, such that it encounters a force resistant to the forward movement that can be triggered by the actuation means procured by the piston movement.

At this point, it should be noted that the fit that must be ensured between the capsule 1 and the housing 14, in that the walls that form this housing 14 properly envelope the capsule 1 to prevent it from expanding and breaking due to the pressure to which it will be subjected from the inside due to the effect of the piston 7.

It is precisely to ensure that the capsule 1 resists this inner pressure, that the bottom of the receptacle has radial reinforcements 20a (visible in Fig. 1).
The olive oil 17 obtained from squeezing the olive preparation will flow out of the capsule 1 through the outlet holes 21 at the bottom 20 of the receptacle 10. Alternatively, as mentioned earlier, it is provided that the machine 2 will be provided with a system for perforating the bottom 20 of the receptacle 10 in the event that it does not have outlet holes.

The piston 7 may be actuated by a mechanical actuation unit with a rack and pinion-type transmission or may be a pneumatically or hydraulically actuated piston 7. Likewise, it is envisaged that the injection head 6 will be mechanically associated with the piston 7 by means of a threaded coupling, such that on promoting a movement in an axial direction to the injection head 6 it will automatically rotate around the piston 7 axis.

Although not represented in figure 5, it is conventionally provided that the housing 14 of the machine 2 will be raised with respect to the machine 2 support base so that it may have a receptacle that collects the olive oil 17 extracted from the capsule 1 underneath the same to collect the olive oil 17 under gravity. The same machine 2 may be provided with a grate or similar whereon this collector receptacle may be arranged, there being a removable tray underneath the grate destined for collecting olive oil waste or drips between one extraction and the next at times when there is no collector receptacle arranged underneath the capsule 1.

It should be noted that the final olive oil obtained by means of this method and the capsule described herein fulfils the requirements and parameters established in Commission Regulation (UE) No. 61/2011, of 24 January 2011, amending Regulation (ECC) No. 2568/91 relative to the characteristics of olive oils and olive-pomace oil and to their analysis methods.

Therefore, the present invention enables a high-quality olive oil to be obtained, maintaining and preserving its organoleptic properties (flavour, aroma and colour) and nutritional values (antioxidants) in perfect condition. Thus, users are provided with a fast, simple and efficient way of consuming the olive oil variety they prefer without having to travel, and allowing its consumption up to six months after the olive harvest without quality loss, due to an olive paste that is conveniently frozen, freeze-dried and conveniently packaged in single-dose capsules, compatible with the corresponding extraction equipment specially designed for such purpose.

## Claims

1. A method for obtaining olive oil *in situ,* which comprises the operation of packaging and preserving in a capsule, preferably a single-dose capsule, a dry olive preparation formed from an olive paste that is firstly frozen and then freeze-dried; and the operation of reconstituting the olive paste by hydrating it inside the capsule to obtain an olive oil that is extracted from the capsule by pressure.

2. The method, according to the preceding claim, **characterised in that** the olive paste reconstituted inside the capsule is also squeezed inside the capsule.

3. A method for elaborating and preserving an olive preparation that comprises the following phases:
a) harvesting the olives at their optimal point of maturity;
b) storing the olives;
c) washing the olives;
d) grinding the olives to obtain a paste;
**characterised in that** it additionally comprises the following phases:
e) first packaging of the paste in a hermetic and aseptic bag;
f) freezing the packaged paste;
g) freeze-drying the frozen paste; and
h) final packaging of the freeze-dried paste in single-dose capsules.

4. The method, according to the claim 3, **characterised in that** the phase e) relative to the first packaging of the paste is carried out in an inert atmosphere, in aseptic and anaerobic conditions, by means of nitrogen injection.

5. The method, according to any one of the claims 3 or 4, **characterised in that** the freeze-drying phase g) is carried out by introducing the frozen paste in vacuum chambers for drying and removing the water contained in the paste by means of a sublimation process, and **in that** the freeze-drying phase g) is carried out at a drying temperature of between 15°C and 35°C, and a vacuum chamber pressure of less than 1 mBar.

6. The method, according to claim 5, **characterised in that** the freeze-drying phase g) is carried out according to the following additional parameters:
- condensation temperature: -41°C;
- pre-cooling temperature: -20°C;
- sublimation time: 3 hours;
- drying time: 24 hours;
- maximum weight per freeze-dried container: 3kg;
- maximum thickness of the freeze-dried container: 18mm.

7. The method, according to any one of the claims 3 to 6, **characterised in that** it additionally comprises an olive pitting phase between phases c) and d), washing and grinding, respectively.

8. A single-dose capsule (1) which comprises a receptacle (10) having an inner cavity only partially full of a dry olive preparation (3) formed from an olive paste that is firstly frozen and then freeze-dried, the capsule (1) also comprising:
- a filtering membrane (22) arranged in or at the bottom (20) of the receptacle (10) and which has micro-perforations (23) suitable for retaining the preparation (3) and the passage of traces of olive wastewater or water particles therethrough, which may contain an olive oil (17) obtainable from rehydrating the olive paste inside the receptacle; and
- an upper film (30) or adhesive that hermetically closes the receptacle (10) at the top.

9. The single-dose capsule, according to claim 8, **characterised in that** the receptacle (10) comprises at least one perimeter step (11) located on the lateral surface thereof and which in turn has micro-perforations (12) configured for a maximum filtration of an olive oil (17) obtainable from rehydrating the olive paste inside the receptacle.

10. The single-dose capsule (1), according to claims 8 or 9, **characterised in that** the bottom (20) of the receptacle (10) is a perforated bottom and **in that** it has adequate reinforcement means (20a) for said bottom to resist internal pressures inside the capsule (1) greater than 10 bar and preferably greater than 15 bar.

11. A method for obtaining an olive oil from a capsule (1) containing a dry olive preparation (3) formed from an olive paste that is firstly frozen and then freeze-dried, the method comprising the following steps:
- revealing the content of the capsule (1);
- homogeneously hydrating the olive paste contained in the capsule (1) inside said capsule; and
- squeezing the olive preparation with the reconstituted olive paste (3') inside the capsule (1), extracting the olive oil obtained from the capsule.

12. A machine (2) for putting the method according to claim 11 into practice, comprising a liquid tank (5) and means for driving (16) the liquid towards at least one injection head (6) having holes (15) for injecting the liquid into a medium, such as the said dry olive preparation (3), **characterised in that** said injection head (6) is mounted on a piston (7) that is prepared to press the medium and subject it to a pressure greater than 10 bar, the injection head (6) being able to adopt at least two positions with respect to the piston (7): an operating position (A) wherein it disposes the orifices (15) outside of the piston (7); and another, concealed position (B) wherein the holes (15) are housed inside the piston (7).

13. The machine (2), according to claim 12, **characterised in that** at least one injection head (6) rotates around an axis (18) parallel or coincident with the piston axis (7).

14. The machine (2), according to claims 12 or 13, **characterised in that** the injection head (6) comprises an annular chamber (6a) that is concentric with respect to the piston (7) axis (18).

15. The machine (2), according to any one of the claims 12 to 14, **characterised in that** the holes (15) of the injection head (6) have a step size of less than 0.5 mm and, more preferably, less than 0.2 mm.

## Patentansprüche

1. Verfahren zur Erzeugung von Olivenöl *in situ,* welches den Vorgang des Verpackens und des Konservierens in einer Kapsel, vorzugsweise einer Einzeldosiskapsel, eines trockenen Olivenpräparats gebildet aus einer Olivenpaste, welche zunächst eingefroren und dann gefriergetrocknet wird; und den Vorgang des Rekonstituierens der Olivenpaste mittels des Rehydratisierens derselben innerhalb der Kapsel, um Olivenöl zu erhalten, welches aus der Kapsel mittels Druck entnommen wird, umfasst.

2. Verfahren nach dem vorhergehenden Anspruch, **dadurch gekennzeichnet, dass** die innerhalb der Kapsel rekonstituierte Olivenpaste auch innerhalb der Kapsel gepresst wird.

3. Verfahren zur Herstellung und zur Konservierung eines Olivenpräparats, welches die folgenden Phasen umfasst:
a) das Ernten der Oliven bei deren optimalen Reifegrad;
b) das Aufbewahren der Oliven;
c) das Waschen der Oliven;
d) das Zerkleinern der Oliven, um eine Paste zu erhalten;
**dadurch gekennzeichnet, dass** es zusätzlich die folgenden Phasen umfasst:
e) das erste Verpacken der Paste in einem hermetischen und aseptischen Beutel;
f) das Einfrieren der verpackten Paste;
g) das Gefriertrocknen der eingefrorenen Paste; und
h) das endgültige Verpacken der gefriergetrockneten Paste in Einzeldosiskapseln.

4. Verfahren nach Anspruch 3, **dadurch gekennzeichnet, dass** die Phase e) bezüglich der ersten Verpackung der Paste in einer inerten Atmosphäre, unter aseptischen und anaerobischen Bedingungen, mittels Stickstoffeinspritzung durchgeführt wird.

5. Verfahren nach einem der Ansprüche 3 oder 4, **dadurch gekennzeichnet, dass** die Gefriertrocknungsphase g) durchgeführt wird, indem die eingefrorene Paste in Vakuumkammern zum Trocknen und zum Entfernen des in der Paste enthaltenes Wasser mittels eines Sublimationsprozesses eingeführt wird, und dass die Gefriertrocknungsphase g) bei einer Trocknungstemperatur von zwischen 15°C und 35°C, und einem Vakuumkammerdruck kleiner als 1 mBar durchgeführt wird.

6. Verfahren nach Anspruch 5, **dadurch gekennzeichnet, dass** die Gefriertrocknungsphase g) gemäß den folgenden zusätzlichen Parametern durchgeführt wird:
- Kondensationstemperatur: -41°C;
- Vorkühlungstemperatur: -20°C;
- Sublimationszeit: 3 Stunden;
- Trocknungszeit: 24 Stunden;
- Maximalgewicht pro gefriergetrockneter Behälter: 3 kg;
- Maximale Dicke des gefriergetrockneten Behälters: 18 mm.

7. Verfahren nach einem der Ansprüche 3 bis 6, **dadurch gekennzeichnet, dass** es zusätzlich eine Olivenentkernungsphase zwischen den Phasen c) und d), jeweils das Waschen und das Zerkleinern, umfasst.

8. Einzeldosiskapsel (1) welche ein Behältnis (10) umfasst, welches einen inneren Hohlraum aufweist, welcher nur teilweise mit einem trockenen Olivenpräparat (3) gefüllt ist, welches aus einer Olivenpaste gebildet ist, welche zunächst eingefroren und dann gefriergetrocknet wird, wobei die Kapsel (1) auch Folgendes umfasst:
- eine Filtermembran (22), welche im oder auf dem Boden (20) des Behältnisses (10) angeordnet ist und welche Mikrobohrungen (23) aufweist, welche dazu geeignet sind, das Präparat (3) und den Durchgang von Spuren von Olivenabwasser oder Wasserpartikel, welche Olivenöl (17) enthalten können, welches aus dem Rehydratisieren der Olivenpaste innerhalb des Behältnisses erhalten werden kann, dadurch zurückzuhalten; und
- eine obere Folie (30) oder ein Klebemittel, welche/welches das Behältnis (10) von oben hermetisch schließt.

9. Einzeldosiskapsel nach Anspruch 8, **dadurch gekennzeichnet, dass** das Behältnis (10) mindestens eine Umfangsstufe (11) umfasst, welche sich auf der Mantelfläche desselben befindet und welche wiederum Mikrobohrungen (12) aufweist, welche für eine maximale Filtrierung von Olivenöl (17), welches aus dem Rehydratisieren der Olivenpaste innerhalb des Behältnisses erhalten werden kann, ausgebildet sind.

10. Einzeldosiskapsel (1) nach den Ansprüchen 8 oder 9, **dadurch gekennzeichnet, dass** der Boden (20) des Behältnisses (10) ein durchbohrter Boden ist und dass es geeignete Verstärkungsmittel (20a) aufweist, damit der genannte Boden Innendrücke innerhalb der Kapsel (1) größer als 10 bar und vorzugsweise größer als 15 bar widersteht.

11. Verfahren zur Erzeugung von Olivenöl aus einer Kapsel (1) enthaltend ein trockenes Olivenpräparat (3) gebildet aus einer Olivenpaste, welche zunächst eingefroren und dann gefriergetrocknet wird, wobei das Verfahren die folgenden Schritte umfasst:
- das Offenlegen des Inhalts der Kapsel (1);
- das homogene Hydratisieren der in der Kapsel (1) enthaltenen Olivenpaste innerhalb der genannten Kapsel; und
- das Pressen des Olivenpräparats mit der innerhalb der Kapsel (1) rekonstituierten Olivenpaste (3'), so dass das erzeugte Olivenöl aus der Kapsel entnommen wird.

12. Maschine (2) zur Umsetzung des Verfahrens nach Anspruch 11, umfassend einen Flüssigkeitsbehälter (5) und Treibmittel (16) zum Treiben der Flüssigkeit zu mindestens einem Einspritzkopf (6) hin, welche Löcher (15) zum Einspritzen der Flüssigkeit in ein Medium, wie das genannte trockene Olivenpräparat (3), aufweist, **dadurch gekennzeichnet, dass** der genannte Einspritzkopf (6) auf einem Kolben (7) montiert ist, welcher dazu vorbereitet ist, das Medium zu drücken und es einem Druck größer als 10 bar auszusetzen, wobei der Einspritzkopf (6) in der Lage ist, mindestens zwei Stellungen in Bezug auf den Kolben (7) einzunehmen: eine Betriebsstellung (A), in welcher es die Öffnungen (15) außerhalb des Kolbens (7) anordnet; und eine andere, versteckte Stellung (B), in welcher die Löcher (15) innerhalb des Kolbens (7) aufgenommen sind.

13. Maschine (2) nach Anspruch 12, **dadurch gekennzeichnet, dass** mindestens ein Einspritzkopf (6) um eine mit der Achse (7) des Kolbens parallele oder übereinstimmende Achse (18) herum rotiert.

14. Maschine (2) nach den Ansprüchen 12 oder 13, **dadurch gekennzeichnet, dass** der Einspritzkopf (6) eine ringförmige Kammer (6a) umfasst, welche in Bezug auf die Achse (18) des Kolbens (7) konzentrisch ist.

15. Maschine (2) nach einem der Ansprüche 12 bis 14, **dadurch gekennzeichnet, dass** die Löcher (15) des Einspritzkopfes (6) eine Schrittgröße kleiner als 0,5 mm und, ganz vorzugsweise, kleiner als 0,2 mm, aufweisen.

## Revendications

1. Procédé d'obtention d'huile d'olive *in situ,* qui comprend l'opération de conditionnement et conservation dans une capsule, de préférence une capsule mono-dose, d'une préparation d'olives sèche formée à partir d'une pâte d'olive qui est premièrement congelée et puis lyophilisée ; et l'opération de reconstitution de la pâte d'olive en l'hydratant au sein de la capsule pour obtenir une huile d'olive qui est extraite de la capsule à pression.

2. Procédé, selon la revendication précédente, **caractérisé en ce que** la pâte d'olive reconstituée au sein de la capsule est également pressée au sein de la capsule.

3. Procédé d'élaboration et conservation d'une préparation d'olives qui comprend les phases suivantes :
a) récolte des olives à leur point optimal de maturité ;
b) stockage des olives ;
c) lavage des olives ;
d) mouture des olives pour obtenir une pâte;
**caractérisé en ce qu'**il comprend en outre les phases suivantes :
e) premier conditionnement de la pâte dans un sac hermétique et aseptique ;
f) congélation de la pâte conditionnée ;
g) lyophilisation de la pâte congelée ; et
h) conditionnement final de la pâte lyophilisée dans des capsules mono-doses.

4. Procédé, selon la revendication 3, **caractérisé en ce que** la phase e) relative au premier conditionnement de la pâte est mise en oeuvre dans une atmosphère inerte, dans des conditions aseptiques et anaérobiques, par le biais d'injection d'azote.

5. Procédé, selon l'une quelconque des revendications 3 ou 4, **caractérisé en ce que** la phase de lyophilisation g) est mise en oeuvre en introduisant la pâte congelée dans des chambres à vide pour sécher et retirer l'eau contenue dans la pâte par le biais d'un procédé de sublimation, et **en ce que** la phase de lyophilisation g) est mise en oeuvre à une température de séchage allant de 15°C à 35°C, et une pression de chambre à vide inférieure à 1 mbar.

6. Procédé selon la revendication 5 **caractérisé en ce que** la phase de lyophilisation g) est mise en oeuvre selon les paramètres supplémentaires suivants :
- température de condensation : -41°C ;
- température de pré-refroidissement : -20°C
- temps de sublimation : 3 heures ;
- temps de séchage : 24 heures ;
- poids maximal par conteneur lyophilisé : 3 kg ;
- épaisseur maximale du conteneur lyophilisé : 18 mm.

7. Procédé, selon l'une quelconque des revendications 3 à 6, **caractérisé en ce qu'**il comprend en outre une phase de piqûre des olives entre les phases c) et d), lavage et mouture, respectivement.

8. Capsule mono-dose (1) qui comprend un réceptacle (10) ayant une cavité intérieure uniquement partiellement remplie d'une préparation d'olives sèche (3) formée à partir d'une pâte d'olive qui est premièrement congelée et ensuite lyophilisée, la capsule (1) comprenant en outre :
- une membrane de filtrage (22) aménagée dans ou au fond (20) du réceptacle (10) et qui a des micro-perforations (23) aptes à retenir la préparation (3) et le passage de traces de particules d'eau ou d'eau usée d'olive à travers celles-ci, qui peut contenir une huile d'olive (17) pouvant être obtenu à partir de la réhydratation de la pâte d'olive au sein du réceptacle ; et
- un film supérieur (30) ou adhésif qui ferme de manière hermétique le réceptacle (10) sur la partie supérieure.

9. Capsule mono-dose, selon la revendication 8, **caractérisée en ce que** le réceptacle (10) comprend au moins un échelon périmétral (11) situé sur la surface latérale de celui-ci et qui à son tour a des micro-perforations (12) configurées pour un filtrage maximal d'une huile d'olive (17) pouvant être obtenu à partir de la réhydratation de la pâte d'olive au sein du réceptacle.

10. Capsule mono-dose (1), selon les revendications 8 ou 9, **caractérisée en ce que** le fond (20) du réceptacle (10) est un fond perforé et **en ce qu'**il a des moyens de renfort appropriés (20a) pour ledit fond pour résister des pressions internes au sein de la capsule (1) supérieures à 10 bar et de préférence supérieures à 15 bar.

11. Procédé d'obtention d'une huile d'olive à partir d'une capsule (1) contenant une préparation d'olives sèche (3) formée à partir d'une pâte d'olive qui est premièrement congelée et ensuite lyophilisée, le procédé comprenant les étapes suivants :
- révélation du contenu de la capsule (1) ;
- hydratation homogène de la pâte d'olive contenue dans la capsule (1) au sein de ladite capsule ; et
- pressage de la préparation d'olives avec la pâte d'olive reconstituée (3') au sein de la capsule (1), en extrayant de l'huile d'olive obtenue à partir de la capsule.

12. Machine (2) de mise en pratique du procédé selon la revendication 11, comprenant un réservoir de liquide (5) et des moyens de conduite (16) du liquide vers au moins une tête d'injection (6) ayant des trous (15) pour injecter le liquide dans un milieu, tel que ladite préparation d'olives sèche (3), **caractérisée en ce que** ladite tête d'injection (6) est montée sur un piston (7) qui est préparé pour presser le milieu et le soumettre à une pression supérieure à 10 bar, la tête d'injection (6) étant apte à adopter au moins deux positions par rapport au piston (7) : une position opérationnelle (A) dans laquelle elle dispose les orifices (15) en dehors du piston (7) ; et une autre position cachée (B) dans laquelle les trous (15) sont logés au sein du piston (7).

13. Machine (2), selon la revendication 12, **caractérisée en ce qu'**au moins une tête d'injection (6) tourne autour d'une axe (18) parallèle ou coïncidant avec l'axe de piston (7).

14. Machine (2), selon les revendications 12 ou 13, **caractérisée en ce que** la tête d'injection (6) comprend une chambre annulaire (6a) qui est concentrique par rapport à l'axe (18) du piston (7).

15. Machine (2), selon l'une quelconque des revendications 12 à 14, **caractérisée en ce que** les trous (15) de la tête d'injection (6) ont une dimension d'échelon inférieur à 0,5 mm, et plus de préférence inférieur à 0,2 mm.
